# FASCICULE DE BREVET EUROPEEN

(11) **EP 4 467 462 B1**
(45) Date de publication et mention de la délivrance du brevet: **01.07.2026**
(21) Numéro de dépôt: 24174424.2
(22) Date de dépôt: 07.05.2024
(51) Int. Cl.: B64D 29/02, B64D 29/06, F16J 15/12

(54) **CARÉNAGE D'AÉRONEF COMPORTANT UN PANNEAU DÉMONTABLE ET UN JOINT D'ÉTANCHÉITÉ COMPRESSIBLE, AÉRONEF COMPORTANT AU MOINS UN TEL CARÉNAGE**
FLUGZEUGVERKLEIDUNG MIT EINER DEMONTIERBAREN PLATTE UND EINER KOMPRIMIERBAREN DICHTUNG, LUFTFAHRZEUG MIT MINDESTENS EINER SOLCHEN VERKLEIDUNG
AIRCRAFT FAIRING COMPRISING A REMOVABLE PANEL AND A COMPRESSIBLE SEAL, AIRCRAFT COMPRISING AT LEAST ONE SUCH FAIRING

(30) Priorité: 19.05.2023 FR 2304965
(43) Date de publication de la demande: 27.11.2024
(73) Titulaire: AIRBUS OPERATIONS (S.A.S.), 31060 Toulouse (FR)
(72) Inventeur: QUARANTA, Jean-Guillaume, 31060 TOULOUSE (FR); BRAS, William, 31060 TOULOUSE (FR); VINCON, Emy, 31060 TOULOUSE (FR); SENTENAC, Mathieu, 31060 TOULOUSE (FR)
(74) Mandataire: Fantin, Laurent

(56) Documents cités:
- EP-A1- 1 544 481
- FR-A1- 3 111 332
- US-A- 4 026 565
- US-A1- 2023 031 384

## Description

La présente demande se rapporte à un carénage d'aéronef comportant un panneau démontable et un joint d'étanchéité compressible ainsi qu'à un aéronef comportant au moins un tel carénage.

Selon un mode de réalisation, un mât d'aéronef comprend une structure secondaire ainsi que plusieurs panneaux de carénage supportés par la structure secondaire. Ces différents panneaux de carénage doivent être agencés de manière à obtenir un carénage sensiblement étanche.

Compte tenu des aléas de fabrication et d'assemblage de la structure secondaire et des panneaux de carénage, il peut subsister des écartements entre les panneaux ou entre les panneaux et la structure secondaire à l'issue de l'assemblage. Ces écartements doivent être comblés.

Selon un premier mode opératoire, un procédé d'étanchéité comprend une étape d'application de bandes de mastic d'étanchéité sur le panneau en utilisant un masque, une étape de retrait du masque, une étape de polymérisation pour durcir le mastic d'étanchéité et obtenir un joint d'étanchéité durci puis une étape de montage du panneau. Selon ce premier mode opératoire, le panneau est démontable et le joint d'étanchéité durci est régulier. Toutefois, ce premier mode opératoire n'est pas satisfaisant car il est chronophage et le joint d'étanchéité durci ne comble pas systématiquement l'écartement à combler.

Selon un deuxième mode opératoire, un procédé d'étanchéité comprend une étape d'application d'un mastic d'étanchéité sur la structure secondaire, le panneau étant démonté, une étape de montage du panneau équipé d'un agent de démoulage, une étape de retrait du surplus du mastic d'étanchéité accessible depuis l'extérieur puis une étape de polymérisation pour durcir le mastic d'étanchéité et obtenir un joint d'étanchéité durci. En suivant, le procédé d'étanchéité comprend une étape de démontage du panneau, une étape de retrait du surplus du mastic d'étanchéité depuis l'intérieur, une étape de vérification de la conformité du joint d'étanchéité durci obtenu après l'étape de polymérisation ainsi qu'une étape de remontage du panneau. Selon ce deuxième mode de réalisation, le panneau est démontable et le joint d'étanchéité durci épouse parfaitement l'écartement à combler. Toutefois, ce deuxième mode opératoire n'est pas satisfaisant car il est chronophage et la forme du joint d'étanchéité durci n'est pas régulière. Par ailleurs, si le joint d'étanchéité durci n'est pas conforme, il est nécessaire de nettoyer la structure secondaire et de recommencer le procédé. Enfin, si le panneau doit être changé, le joint d'étanchéité durci n'est pas nécessairement adapté au nouveau panneau.

Selon un troisième mode de réalisation, le procédé d'étanchéité comprend une étape d'application du mastic d'étanchéité sur la structure secondaire, une étape de montage du panneau avant durcissement du mastic d'étanchéité, une étape de retrait du surplus du mastic d'étanchéité depuis l'extérieur puis une étape de polymérisation pour durcir le mastic d'étanchéité et obtenir un joint d'étanchéité durci. Selon ce troisième mode de réalisation, le joint d'étanchéité durci épouse parfaitement l'écartement à combler. Toutefois, ce troisième mode opératoire n'est pas satisfaisant car il est chronophage et le panneau n'est pas démontable sans détériorer le joint d'étanchéité.

Pour les trois modes opératoires, le procédé d'étanchéité est chronophage en raison du temps nécessaire à la préparation et à la polymérisation du mastic d'étanchéité. Selon un autre inconvénient, le joint d'étanchéité obtenu suite à la polymérisation du mastic d'étanchéité présente une certaine rigidité qui ne permet pas d'absorber d'éventuelles variations dimensionnelles de l'écartement en raison de phénomènes vibratoires et aérodynamiques.

Le document US2023/0031384 décrit un capot configuré pour obturer une ouverture située au niveau du fuselage et relié à un support par des éléments de fixation. Ce capot présente au niveau de sa face interne une butée au niveau de laquelle sont situés les éléments de fixation ainsi qu'une gorge décalée par rapport à la butée dans laquelle est logé un joint d'étanchéité compressible.

La présente invention vise à remédier à tout ou partie des inconvénients de l'art antérieur.

A cet effet, l'invention a pour objet un carénage d'aéronef comportant au moins une structure, au moins un panneau de carénage ainsi que plusieurs éléments de fixation reliant le panneau de carénage et la structure, le panneau de carénage comportant une face intérieure orientée vers la structure, un bord périphérique et au moins une première zone d'appui située sur la face intérieure et longeant le bord périphérique, la structure comportant au moins une deuxième zone d'appui faisant face à la première zone d'appui, le carénage d'aéronef comportant au moins un joint d'étanchéité supporté par le panneau de carénage et positionné entre les première et deuxième zones d'appui; le panneau de carénage comprenant au moins une butée rigide et positionnée dans la première zone d'appui, ladite butée étant une surépaisseur en saillie par rapport à la face intérieure du panneau de carénage, qui présente une face libre faisant face à la structure et s'étend entre des bords extérieur et intérieur situés de part et d'autre des éléments de fixation ; le joint d'étanchéité étant un joint d'étanchéité compressible qui présente un taux de compression, la butée et le joint d'étanchéité compressible étant configurés de manière à ce que le taux de compression du joint d'étanchéité compressible soit inférieur ou égal à 90%.

Selon l'invention, le joint d'étanchéité compressible est discontinu et présente plusieurs tronçons intercalés entre les éléments de fixation, la face libre comprenant une gorge pour chaque tronçon, en creux par rapport à la face libre, configurée pour le loger partiellement.

En fonctionnement, le joint d'étanchéité compressible n'est jamais totalement comprimé en raison de la présence de la butée, ce qui permet de garantir une étanchéité entre le panneau de carénage et la structure.

Selon une autre caractéristique, la butée et le joint d'étanchéité compressible sont configurés de manière à ce que le taux de compression du joint d'étanchéité compressible soit compris entre 10 et 85%.

Selon une autre caractéristique, la surépaisseur et le panneau de carénage ne forment qu'une unique et même pièce.

Selon une autre caractéristique, le panneau de carénage comprend au moins une liaison par collage reliant le joint d'étanchéité compressible et la surépaisseur ou le panneau de carénage.

Selon une autre caractéristique, la gorge et le joint d'étanchéité compressible sont configurés de manière à ce que le joint d'étanchéité compressible soit comprimé dans la gorge afin d'obtenir un maintien par compression du joint d'étanchéité compressible dans la gorge.

L'invention a également pour objet un aéronef comprenant au moins un carénage d'aéronef selon l'une des caractéristiques précédentes.

D'autres caractéristiques et avantages ressortiront de la description de l'invention qui va suivre, description donnée à titre d'exemple uniquement, en regard des dessins annexés parmi lesquels :
- La figure 1 est une vue latérale d'un aéronef,
- La figure 2 est une vue latérale d'un mât d'aéronef,
- La figure 3 est une vue de face d'un panneau de carénage d'aéronef sans surépaisseur ne faisant pas partie de l'objet actuellement revendiqué,
- La figure 4 est une vue de face d'un panneau de carénage d'aéronef comprenant une surépaisseur, avant le montage d'un joint d'étanchéité compressible, illustrant un mode de réalisation de l'invention,
- La figure 5 représente des coupes transversales d'une surépaisseur pourvue d'une gorge illustrant différents modes de réalisation de l'invention,
- La figure 6 est une coupe transversale d'une structure et d'un panneau de carénage équipé d'une surépaisseur et d'un joint d'étanchéité compressible, avant le montage du panneau, illustrant un mode de réalisation de l'invention,
- La figure 7 est une coupe transversale de la structure et du panneau de carénage visibles sur la figure 6, après le montage du panneau,
- La figure 8 est une coupe longitudinale selon la ligne VIII-VIII de la figure 7 de la structure et du panneau de carénage,
- La figure 9 est une coupe transversale d'une structure et d'un panneau de carénage équipé d'un joint d'étanchéité compressible illustrant un exemple ne faisant pas partie de l'objet actuellement revendiqué,
- La figure 10 est une vue de face d'un panneau de carénage comprenant une surépaisseur et un joint d'étanchéité compressible illustrant un mode de réalisation de l'invention,
- La figure 11 représente en partie (A) une vue de face d'une partie d'un panneau de carénage comprenant une surépaisseur et un joint d'étanchéité compressible illustrant un autre exemple ne faisant pas partie de l'objet actuellement revendiqué, ainsi qu'en partie (B) une coupe selon la ligne B-B du panneau de carénage visible sur la partie (A) et d'une structure,
- La figure 12 représente en partie (A) une vue de face d'une partie d'un panneau de carénage comprenant une surépaisseur et un joint d'étanchéité compressible illustrant un autre exemple ne faisant pas partie de l'objet actuellement revendiqué, ainsi qu'en partie (B) une coupe selon la ligne B-B du panneau de carénage visible sur la partie (A) et d'une structure,
- La figure 13 représente en partie (A) une vue de face d'une partie d'un panneau de carénage comprenant une surépaisseur et un joint d'étanchéité compressible illustrant un autre exemple ne faisant pas partie de l'objet actuellement revendiqué, ainsi qu'en partie (B) une coupe selon la ligne B-B du panneau de carénage visible sur la partie (A) et d'une structure,
- La figure 14 représente en partie (A) une vue de face d'une partie d'un panneau de carénage comprenant une surépaisseur et un joint d'étanchéité compressible illustrant un autre exemple ne faisant pas partie de l'objet actuellement revendiqué, ainsi qu'en partie (B) une coupe selon la ligne B-B du panneau de carénage visible sur la partie (A) et d'une structure,
- La figure 15 est une coupe transversale d'une structure et d'un panneau de carénage comprenant une surépaisseur et un joint d'étanchéité compressible illustrant un mode de réalisation de l'invention,
- La figure 16 est une coupe transversale d'une structure et d'un panneau de carénage comprenant une surépaisseur et un joint d'étanchéité compressible illustrant un autre mode de réalisation de l'invention.

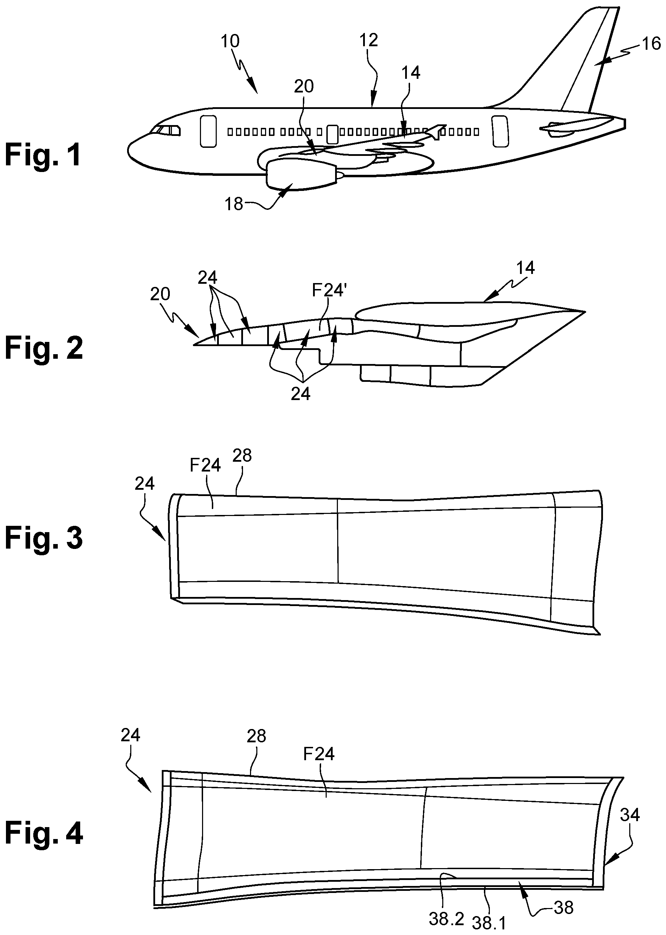

Comme illustré sur la figure 1, un aéronef 10 comprend un fuselage 12, des ailes 14, un empennage 16, des ensembles de propulsion 18 ainsi que des mâts 20 reliant chacun un des ensembles de propulsion 18 à une des ailes 14. Chacun de ces éléments comporte un carénage aérodynamique.

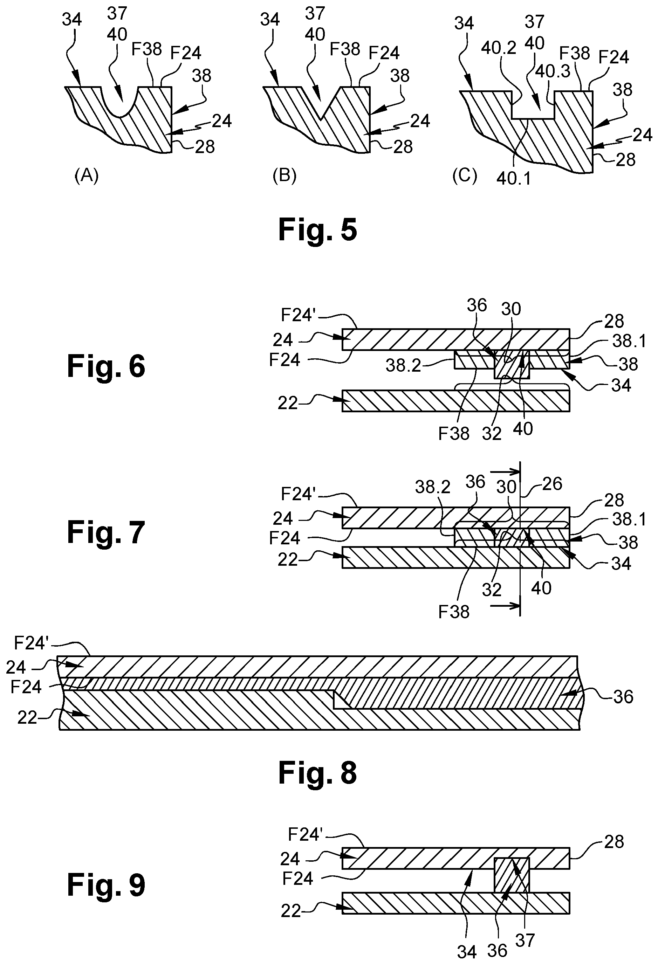

Comme illustré sur la figure 2, chaque mât 20 comprend au moins une structure 22 (visible sur les figures 6 à 8, 11 à 16) et plusieurs panneaux de carénage 24 agencés de manière à former le carénage aérodynamique du mât 20 et reliés chacun à la structure 22 par au moins un élément de fixation 26. Il en est de même pour le fuselage, les ailes 14, l'empennage 16 et les ensembles de propulsion 18.

Quel que soit le mode de réalisation, un carénage d'aéronef comprend au moins une structure 22, au moins un panneau de carénage 24 ainsi que plusieurs éléments de fixation 26 (visible sur la figure 7) reliant le panneau de carénage 24 et la structure 22.

Comme illustré sur les figures 6 à 16, le panneau de carénage 24 présente une face intérieure F24 orientée vers la structure 22 ainsi qu'une face extérieure F24' opposée à la face intérieure F24. Selon une configuration, le panneau de carénage 24 se présente sous la forme d'une paroi plus ou moins épaisse, comme une tôle métallique ou une plaque en matériau composite par exemple. Pour chaque élément de fixation 26, le panneau de carénage 24 comprend un trou de passage qui peut être chanfreiné au niveau de son extrémité débouchant au niveau de la face extérieure F24'.

Selon une configuration, le panneau de carénage 24 est démontable et relié à la structure 22 par au moins un élément de fixation 26 démontable, comme une vis ou un boulon par exemple.

Comme illustré sur les figures 3 et 6, le panneau de carénage 24 comprend au moins un bord périphérique 28. Selon un agencement, le panneau de carénage 24 comprend un bord périphérique 28 polygonal, rectangulaire par exemple. Le panneau de carénage 24 comprend, au niveau de sa face intérieure F24, au moins une première zone d'appui 30 orientée vers la structure 22, longeant le bord périphérique 28, qui s'étend à partir du bord périphérique 28 sur une largeur donnée (dimension prise selon une direction perpendiculaire au bord périphérique 28).

En complément, la structure 22 comprend au moins une deuxième zone d'appui 32 faisant face à la première zone d'appui 30. Généralement, la structure 22 comprend une deuxième zone d'appui 32 pour chaque première zone d'appui 30 du panneau de carénage 24.

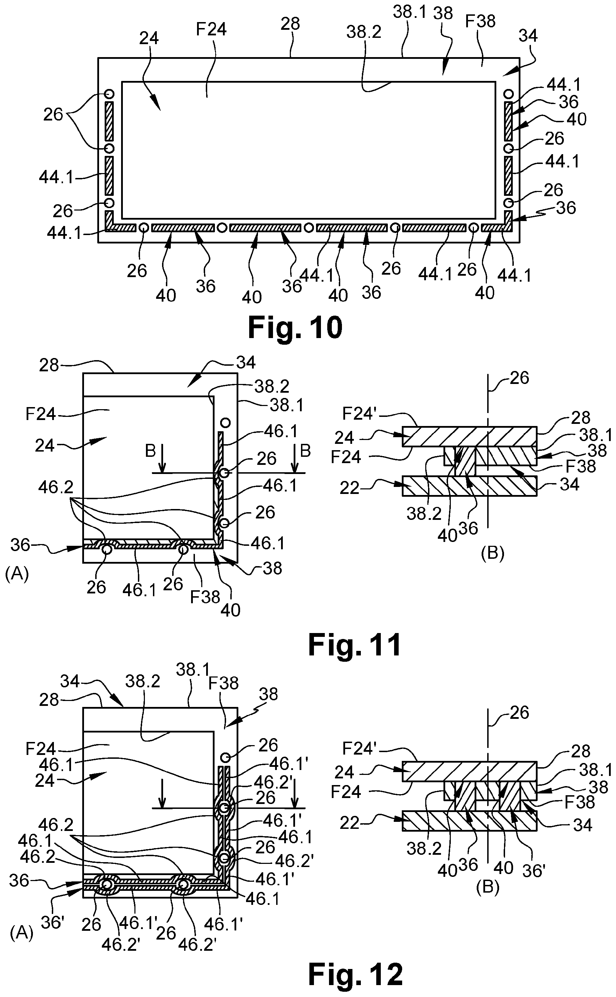

Selon un agencement visible sur les figures 10 à 14, les éléments de fixation 26 sont positionnés au niveau des première et deuxième zones d'appui 30, 32.

Le carénage d'aéronef comprend au moins un joint d'étanchéité intercalé entre la structure 22 et le panneau de carénage 24, plus particulièrement entre les première et deuxième zones d'appui 30, 32, le joint d'étanchéité étant en contact avec la structure 22 et le panneau de carénage 24.

Le panneau de carénage 24 comprend au moins une butée 34 rigide positionnée dans au moins une première zone d'appui 30. En complément, le joint d'étanchéité est un joint d'étanchéité compressible 36 et comprend une partie en saillie par rapport à la butée 34, selon une direction perpendiculaire à la face intérieure F24 du panneau de carénage 24, lorsque le joint d'étanchéité compressible 36 n'est pas comprimé.

Quel que soit le mode de réalisation, le joint d'étanchéité compressible 36 est supporté par le panneau de carénage 24 et présente une élasticité à la manière d'un élément en mousse solide. Selon un mode de réalisation, le joint d'étanchéité compressible 36 est un produit semi-fini ne nécessitant pas de polymérisation, ce qui permet d'obtenir un gain de temps important pour le procédé d'étanchéité des panneaux du carénage. Le fait qu'il soit compressible permet au joint d'étanchéité 36 de s'adapter à différentes configurations et de combler différents écartements. Dans la mesure où le joint d'étanchéité compressible 36 est supporté par le panneau de carénage 24 et non par la structure 22, la mise en place du joint d'étanchéité ne bloque pas l'avancement de la production de la structure 22.

Le joint d'étanchéité compressible 36 présente un taux de compression variant de 0 lorsque le joint d'étanchéité compressible 36 n'est pas comprimé et 100% de sa plage fonctionnelle lorsque le joint d'étanchéité compressible 36 est totalement comprimé et ne peut plus être comprimé.

La butée 34 et le joint d'étanchéité compressible 36 sont configurés de manière à ce que le taux de compression du joint d'étanchéité compressible 36 soit inférieur ou égal à 90%. En fonctionnement, même si l'écartement entre le panneau de carénage 24 et la structure 22 varie en raison de phénomènes vibratoires et aérodynamiques, le joint d'étanchéité compressible 36 n'est jamais totalement comprimé en raison de la présence de la butée 34 rigide, ce qui permet de ne pas endommager le joint d'étanchéité compressible 36 et de garantir une étanchéité entre le panneau de carénage 24 et la structure 22. Idéalement, la butée 34 et le joint d'étanchéité compressible 36 sont configurés de manière à ce que le taux de compression du joint d'étanchéité compressible 36 soit compris entre 10 et 85% et de préférence de l'ordre de 80%.

Comme illustré sur la figure 8, la distance entre la première zone d'appui 30 du panneau de carénage 24 et la deuxième zone d'appui 32 de la structure 22 n'est pas nécessairement constante le long du joint d'étanchéité compressible 36. Par conséquent, le joint d'étanchéité compressible 36 peut présenter un taux de compression qui varie sur sa longueur. Dans les cas non actuellement revendiqués, le joint d'étanchéité compressible 36 s'étend de manière continue sur tout le bord périphérique 28 du panneau de carénage 24. En variante également non actuellement revendiquée, le joint d'étanchéité compressible 36 s'étend de manière continue sur une partie du bord périphérique 28, comme illustré sur les figures 11 à 14, ou de manière discontinue et sur une partie du bord périphérique 28 du panneau de carénage 24, comme illustré sur la figure 11. Quel que soit le mode de réalisation, le joint d'étanchéité compressible 36 s'étend le long d'au moins une partie du bord périphérique 28.

Selon un exemple non actuellement revendiqué visible sur la figure 9, le panneau de carénage 24 comprend au moins une gorge 37 en creux par rapport à la face intérieure F24 du panneau de carénage 24 dans laquelle est positionné en partie le joint d'étanchéité compressible 36, ce dernier étant en saillie par rapport à la face intérieure F24 qui forme la butée 34. Selon un agencement, la gorge 37 est sensiblement parallèle au bord périphérique 28. Selon cet exemple, le joint d'étanchéité compressible 36 est maintenu par tout moyen dans la gorge 37.

Selon l'invention, et comme illustré sur les figures 6, 7, 10 à 16, la butée 34 est une surépaisseur 38 en saillie par rapport à la face intérieure F24 du panneau de carénage 24.

Selon un mode de réalisation, la surépaisseur 38 est un élément distinct du panneau de carénage 24, comme une bande de matière rapportée sur la face intérieure F24 du panneau de carénage 24 par exemple. Selon un autre mode de réalisation, la surépaisseur 38 et le panneau de carénage 24 ne forment qu'une unique et même pièce. Selon ce dernier mode de réalisation, lorsque le panneau de carénage 24 est en matériau composite, il comprend un nombre de plis de fibres plus important au droit de la surépaisseur 38 qu'en dehors de la surépaisseur 38. Bien entendu, l'invention n'est pas limitée à ce mode de réalisation pour obtenir une surépaisseur 38 intégrée au panneau de carénage 24.

Comme illustré sur la figure 4, la surépaisseur 38 s'étend de manière continue tout le long du bord périphérique 28 du panneau de carénage 24. En variante, la surépaisseur 38 s'étend de manière discontinue le long d'une partie du bord périphérique 28 du panneau de carénage 24. Ainsi, le panneau de carénage 24 peut comprendre au moins une surépaisseur 38 continue ou discontinue qui s'étend le long d'au moins une partie du bord périphérique 28.

Selon l'invention, chaque surépaisseur 38 s'étend entre un bord extérieur 38.1, situé au droit du bord périphérique 28, et un deuxième bord intérieur 38.2, les bords extérieur et intérieur 38.1, 38.2 étant situés de part et d'autre des éléments de fixation 26. La surépaisseur 38 s'étend sur toute la largeur de la première zone d'appui 30 du panneau de carénage 24.

Selon un mode de réalisation, le joint d'étanchéité compressible 36 présente une largeur inférieure ou égale à un tiers de la largeur de la surépaisseur 38.

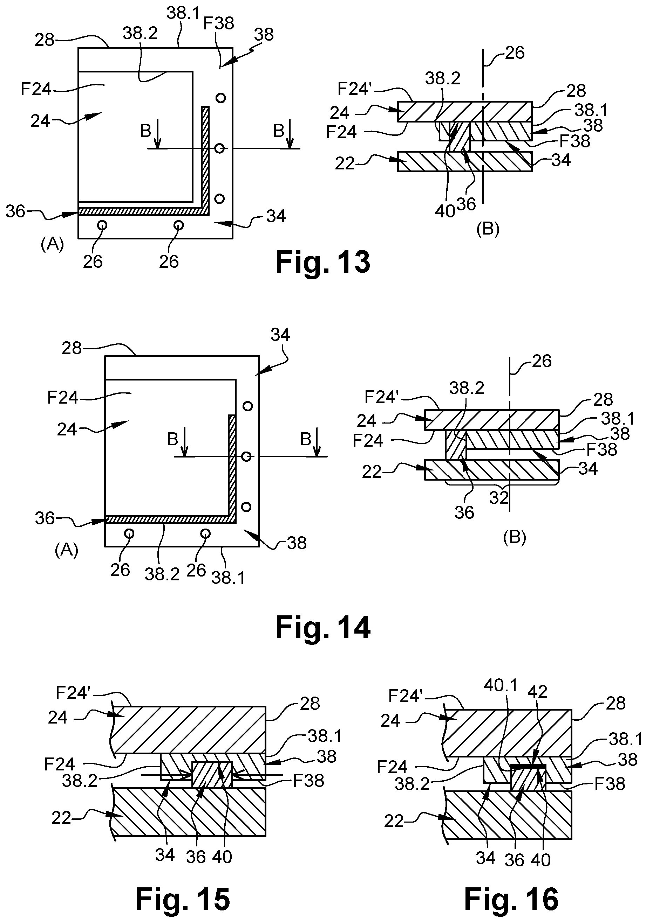

Selon un agencement non actuellement revendiqué visible sur la figure 14, le joint d'étanchéité compressible 36 est accolé à la surépaisseur 38. Selon une variante non actuellement revendiquée, le joint d'étanchéité compressible 36 est intercalé entre le bord périphérique 28 et la surépaisseur 38. Selon une autre variante non actuellement revendiquée, la surépaisseur 38 est intercalée entre le bord périphérique 28 et le joint d'étanchéité compressible 36. Selon cet agencement, le joint d'étanchéité compressible 36 est relié à la face intérieure F24 du panneau de carénage 24 par une liaison comme une liaison par collage ou une liaison par vissage par exemple.

En parallèle, la deuxième zone d'appui 32 de la structure 22 présente une largeur suffisante pour être en contact avec la butée 34 et le joint d'étanchéité compressible 36.

Selon d'autres modes de réalisation visibles sur les figures 6 à 18, 10 et 16, la surépaisseur 38 présente une face libre F38 faisant face à la structure 22, sensiblement parallèle à la face intérieure F24 du panneau de carénage 24 et distante de cette dernière. La surépaisseur 38 comprend au moins une gorge 40, en creux par rapport à la face libre F38, configurée pour loger partiellement le joint d'étanchéité compressible 36.

La gorge 37, 40 peut présenter différentes sections transversales, comme illustré sur la figure 5. Ainsi, la gorge 40 peut présenter une section transversale en U, comme illustré sur la partie (A) de la figure 5, une section transversale en V, comme illustré sur la partie (B) de la figure 5, ou une section transversale carrée ou rectangulaire, comme illustré sur la partie (C) de la figure 5. Bien entendu, l'invention n'est pas limitée à ces sections transversales.

Selon le mode de réalisation visible sur la partie (C) de la figure 5, la gorge 37, 40 présente un fond 40.1 distant de la face libre F38 de la surépaisseur 38 ou la face intérieure F24 du panneau de carénage 24 ainsi que des premier et deuxième chants 40.2, 40.3 reliant le fond 40.1 et la face libre F38 de la surépaisseur 38 ou la face intérieure F24 du panneau de carénage 24.

La gorge 37, 40 présente une profondeur (distance entre le fond 40.1 et la face libre F38 de la surépaisseur 38 ou la face intérieure F24 du panneau de carénage 24) configurée de manière à ce que le taux de compression du joint d'étanchéité compressible 36 soit compris entre 10 et 85% et de préférence de l'ordre de 80%.

Selon un mode de réalisation visible sur la figure 15, le joint d'étanchéité compressible 36 et la gorge 40 sont configurés de manière à ce que le joint d'étanchéité compressible 36 soit comprimé dans la gorge 40, plus particulièrement entre les premier et deuxième chants 40.2, 40.3 de la gorge 40. Cet agencement permet d'obtenir un maintien par compression du joint d'étanchéité compressible 36 dans la gorge 40. Cette solution peut également s'appliquer lorsque la gorge 37 est en creux par rapport à la face intérieure F24 du panneau de carénage 24 et ce dernier ne comprend pas de surépaisseur comme revendiqué, comme illustré sur la figure 9.

Selon un autre mode de réalisation, visible sur la figure 16, le panneau de carénage 24 comprend au moins une liaison par collage 42 reliant le joint d'étanchéité compressible 36 et la surépaisseur 38. Selon une configuration, la liaison par collage 42 est positionnée entre le joint d'étanchéité compressible 36 et le fond 40.1 de la gorge 40.

Selon tous les modes de réalisation, et comme visible sur la figure 10, le panneau de carénage 24 comprend un joint d'étanchéité compressible 36 discontinu présentant plusieurs tronçons 44.1 intercalés entre les éléments de fixation 26. En complément, le panneau de carénage 24 comprend une gorge 40 pour chaque tronçon 44.1. Selon ce mode de réalisation, les gorges 40 et les tronçons 44.1 du joint d'étanchéité compressible 36 sont rectilignes ou polygonaux et présentent chacune une géométrie simple.

Selon les exemples non actuellement revendiqués visible sur les figures 11 et 12, le panneau de carénage 24 comprend au moins un joint d'étanchéité compressible 36 continu présentant des premiers tronçons 46.1 rectilignes ou polygonaux intercalés entre les éléments de fixation 26 ainsi que des deuxièmes tronçons 46.2 courbes, en arc de cercle, reliant les premiers tronçons 46.1 en contournant les éléments de fixation 26, lesdits deuxièmes tronçons 46.2 étant situés entre les éléments de fixation 26 et le bord extérieur ou intérieur 38.1, 38.2 de la surépaisseur 38. Selon l'exemple non actuellement revendiqué visible sur la figure 11, le panneau de carénage 24 comprend un seul joint d'étanchéité compressible 36 continu dont les deuxièmes tronçons 46.2 courbes sont situés entre les éléments de fixation 26 et le bord intérieur 38.2 de la surépaisseur 38. Selon l'exemple non actuellement revendiqué visible sur la figure 12, le panneau de carénage 24 comprend des premier et deuxième joints d'étanchéité compressibles 36, 36' continus, les premiers tronçons 46.1 du premier joint d'étanchéité compressible 36 étant parallèles et espacés des premiers tronçons 46.1' du deuxième joint d'étanchéité compressible 36', les deuxièmes tronçons 46.2 courbes du premier joint d'étanchéité compressible 36 contournant les éléments de fixation 26 d'un premier côté situé entre les éléments de fixation 26 et le bord intérieur 38.2 de la surépaisseur 38, les deuxièmes tronçons 46.2' courbes du deuxième joint d'étanchéité compressible 36' contournant les éléments de fixation 26 d'un deuxième côté situé entre les éléments de fixation 26 et le bord extérieur 38.1 de la surépaisseur 38.

Contrairement au mode de réalisation visible sur la figure 10 et selon les exemples non actuellement revendiqués visibles sur les figures 11 et 12, les gorges sont plus complexes à réaliser. De plus, la surépaisseur 38 et la deuxième zone d'appui 32 de la structure 22 sont plus larges.

Selon un exemple non actuellement revendiqué visible sur la figure 13, le panneau de carénage 24 comprend un unique joint d'étanchéité compressible 36 continu comportant au moins un tronçon rectiligne ou polygonal situé entre les éléments de fixation 26 et le bord extérieur ou intérieur 38.1, 38.2 de la surépaisseur 34. En complément, la surépaisseur 38 présente une gorge 40 qui présente au moins un tronçon rectiligne, parallèle au bord extérieur ou intérieur 38.1, 38.2 de la surépaisseur 38, situé entre les éléments de fixation 26 et le bord extérieur ou intérieur 38.1, 38.2 de la surépaisseur 34. Selon cet exemple la gorge 40 ne comprend que des tronçons rectilignes ou polygonaux, ce qui tend à simplifier sa réalisation. La surépaisseur 38 et la deuxième zone d'appui 32 de la structure 22 sont plus larges que selon le mode de réalisation visible sur la figure 10.

## Revendications

1. Carénage d'aéronef comportant au moins une structure (22), au moins un panneau de carénage (24) ainsi que plusieurs éléments de fixation (26) reliant le panneau de carénage (24) et la structure (22), le panneau de carénage (24) comportant une face intérieure (F24) orientée vers la structure (22), un bord périphérique (28) et au moins une première zone d'appui (30) située sur la face intérieure (F24) et longeant le bord périphérique (28), la structure (22) comportant au moins une deuxième zone d'appui (32) faisant face à la première zone d'appui (30), le carénage d'aéronef comportant au moins un joint d'étanchéité supporté par le panneau de carénage (24) et positionné entre les première et deuxième zones d'appui (30, 32) ; le panneau de carénage (24) comprenant au moins une butée (34) rigide et positionnée dans la première zone d'appui (30), ladite butée (34) étant une surépaisseur (38) en saillie par rapport à la face intérieure (F24) du panneau de carénage (24), qui présente une face libre (F38) faisant face à la structure (22) et s'étend entre des bords extérieur et intérieur (38.1, 38.2) situés de part et d'autre des éléments de fixation (26); le joint d'étanchéité étant un joint d'étanchéité compressible (36) qui présente un taux de compression, la butée (34) et le joint d'étanchéité compressible (36) étant configurés de manière à ce que le taux de compression du joint d'étanchéité compressible (36) soit inférieur ou égal à 90% ; **caractérisé en ce que** le joint d'étanchéité compressible (36) est discontinu et présente plusieurs tronçons (44.1) intercalés entre les éléments de fixation (26), la face libre (F38) comprenant une gorge (40) pour chaque tronçon (44.1), en creux par rapport à la face libre (F38), configurée pour le loger partiellement.

2. Carénage d'aéronef selon la revendication 1, **caractérisé en ce que** la butée (34) et le joint d'étanchéité compressible (36) sont configurés de manière à ce que le taux de compression du joint d'étanchéité compressible (36) soit compris entre 10 et 85%.

3. Carénage d'aéronef selon l'une des revendications précédentes, **caractérisé en ce que** la surépaisseur (38) et le panneau de carénage (24) ne forment qu'une unique et même pièce.

4. Carénage d'aéronef selon l'une des revendications précédentes, **caractérisé en ce que** le panneau de carénage (24) comprend au moins une liaison par collage (42) reliant le joint d'étanchéité compressible (36) et la surépaisseur (38) ou le panneau de carénage (24).

5. Carénage d'aéronef selon l'une des revendications précédentes, **caractérisé en ce que** la gorge (37, 40) et le joint d'étanchéité compressible (36) sont configurés de manière à ce que le joint d'étanchéité compressible (36) soit comprimé dans la gorge (37, 40) afin d'obtenir un maintien par compression du joint d'étanchéité compressible (36) dans la gorge (37, 40).

6. Aéronef comprenant au moins un carénage d'aéronef selon l'une des revendications précédentes.

## Patentansprüche

1. Luftfahrzeugverkleidung mit wenigstens einer Struktur (22), wenigstens einer Verkleidungsplatte (24) sowie mehreren Befestigungselementen (26), die die Verkleidungsplatte (24) und die Struktur (22) verbinden, wobei die Verkleidungsplatte (24) eine Innenseite (F24), die der Struktur (22) zugewandt ist, einen Außenrand (28) und wenigstens eine erste Auflagezone (30) aufweist, die sich auf der Innenseite (F24) befindet und entlang des Außenrands (28) verläuft, wobei die Struktur (22) wenigstens eine zweite Auflagezone (32) aufweist, die der ersten Auflagezone (30) gegenüberliegt, wobei die Luftfahrzeugverkleidung wenigstens eine Dichtung aufweist, die von der Verkleidungsplatte (24) gehalten ist und zwischen der ersten und der zweiten Auflagezone (30, 32) angeordnet ist, wobei die Verkleidungsplatte (24) wenigstens einen Anschlag (34) aufweist, der starr und in der ersten Auflagezone (30) angeordnet ist, wobei der Anschlag (34) eine Verdickung (38) ist, die in Bezug auf die Innenseite (F24) der Verkleidungsplatte (24) vorsteht, die eine freie Seite (F38) aufweist, die der Struktur (22) zugewandt ist und die sich zwischen einem äußeren und einem inneren Rand (38.1, 38.2) erstreckt, die sich beidseits der Befestigungselemente (26) befinden, und wobei die Dichtung eine kompimierbare Dichtung (36) ist, die ein Kompressionsverhältnis aufweist, wobei der Anschlag (34) und die komprimierbare Dichtung (36) so eingerichtet sind, dass das Kompressionsverhältnis der komprimierbaren Dichtung (36) kleiner oder gleich 90% ist, **dadurch gekennzeichnet, dass** die komprimierbare Dichtung (36) unterbrochen ist und eine Vielzahl von Abschnitten (44.1) aufweist, die zwischen den Befestigungselementen (26) eingefügt sind, wobei die freie Fläche (F38) eine Nut (40) für jeden Abschnitt (44.1) aufweist, die in Bezug auf die freie Fläche (F38) vertieft ist und so eingerichtet ist, dass sie diesen teilweise aufnimmt.

2. Luftfahrzeugverkleidung nach Anspruch 1, **dadurch gekennzeichnet, dass** der Anschlag (34) und die komprimierbare Dichtung (36) so eingerichtet sind, dass das Kompressionsverhältnis der komprimierbaren Dichtung (36) zwischen 10 und 85% liegt.

3. Luftfahrzeugverkleidung nach einem der vorhergehenden Ansprüche, **dadurch gekennzeichnet, dass** die Verdickung (38) und die Verkleidungsplatte (24) ein einziges, einheitliches Teil bilden.

4. Luftfahrzeugverkleidung nach einem der vorhergehenden Ansprüche, **dadurch gekennzeichnet, dass** die Verkleidungsplatte (24) wenigstens eine Klebeverbindung (42) aufweist, die die komprimierbare Dichtung (36) und die Verdickung (38) oder die Verkleidungsplatte (24) verbindet.

5. Luftfahrzeugverkleidung nach einem der vorhergehenden Ansprüche, **dadurch gekennzeichnet, dass** die Nut (37, 40) und die komprimierbare Dichtung (36) so eingerichtet sind, dass die komprimierbare Dichtung (36) in der Nut (37, 40) komprimiert ist, um einen komprimierten Halt der komprimierbaren Dichtung (36) in der Nut (37, 40) zu erzielen.

6. Luftfahrzeug, das wenigstens eine Luftfahrzeugverkleidung nach einem der vorhergehenden Ansprüche aufweist.

## Claims

1. Aircraft fairing having at least one structure (22), at least one fairing panel (24) and several fastening elements (26) connecting the fairing panel (24) and the structure (22), the fairing panel (24) having an inner face (F24) oriented towards the structure (22), a peripheral edge (28) and at least one first bearing zone (30) situated on the inner face (F24) and running along the peripheral edge (28), the structure (22) having at least one second bearing zone (32) facing the first bearing zone (30), the aircraft fairing having at least one seal supported by the fairing panel (24) and positioned between the first and second bearing zones (30, 32); the fairing panel (24) comprising at least one rigid stop (34) positioned in the first bearing zone (30), said stop (34) being an overthickness (38) that projects with respect to the inner face (F24) of the fairing panel (24), which has a free face (F38) facing the structure (22) and extends between outer and inner edges (38.1, 38.2) situated on either side of the fastening elements (26); the seal being a compressible seal (36) which has a compression ratio, the stop (34) and the compressible seal (36) being configured such that the compression ratio of the compressible seal (36) is less than or equal to 90%; **characterized in that** the compressible seal (36) is discontinuous and has a plurality of segments (44.1) interposed between the fastening elements (26), the free face (F38) comprising one groove (40) for each segment (44.1), recessed with respect to the free face (F38), configured to partially house it.

2. Aircraft fairing according to Claim 1, **characterized in that** the stop (34) and the compressible seal (36) are configured such that the compression ratio of the compressible seal (36) is between 10 and 85%.

3. Aircraft fairing according to one pf the preceding claims, **characterized in that** the overthickness (38) and the fairing panel (24) form just a single piece.

4. Aircraft fairing according to one of the preceding claims, **characterized in that** the fairing panel (24) comprises at least one connection by adhesive bonding (42) connecting the compressible seal (36) and the overthickness (38) or the fairing panel (24).

5. Aircraft fairing according to one of the preceding claims, **characterized in that** the groove (37, 40) configured to partially house the compressible seal (36), the groove (37, 40) and the compressible seal (36) are configured such that the compressible seal (36) is compressed in the groove (37, 40) in order to obtain retention by compression of the compressible seal (36) in the groove (37, 40).

6. Aircraft comprising at least one aircraft fairing according to one of the preceding claims.
